# EUROPEAN PATENT APPLICATION

(11) **EP 4 560 932 A1**
(43) Date of publication of application: **28.05.2025**
(21) Application number: 23211098.1
(22) Date of filing: 21.11.2023
(51) Int. Cl.: H04B 7/08, G06N 20/00

(54) **ML-ASSISTED SELECTION COMBINING**

(71) Applicant: Vestel Elektronik Sanayi ve Ticaret A.S., 45030 Manisa (TR)
(72) Inventor: AYGÜL, Mehmet Ali, 45030 Manisa (TR); KIRISKEN, Barbaros, 45030 Manisa (TR)
(74) Representative: Grünecker Patent- und Rechtsanwälte PartG mbB

(57) **Abstract**

Methods and apparatuses are provided for reception path selection, including inputting, to a trained machine learning module (MLM), path identifications representing paths selected as having a best reception quality for respective preceding reception periods; obtaining from the MLM, an identification of a predicted path predicted to provide a best reception quality in an upcoming reception period; and selecting the predicted path for receiving signals in the upcoming reception period. Moreover, methods and apparatuses are provided for determining a time period comprising: inputting, to a MLM, time period settings for the receiver diversity configuration previously selected as best for respective predetermined time intervals, wherein the time period setting is a length of time period in which the receiver diversity configuration remains the same; obtaining, from the MLM, a predicted time period for the upcoming time interval, predicted to be best among predefined time period settings according to a predefined criterion; and setting the predicted time period for the upcoming time interval. Moreover, methods and apparatuses for training the MLMs are provided.

## Description

The present disclosure relates to the field of wireless communication. In particular, the present disclosure relates to methods and apparatuses for reception path selection and the corresponding configuration.

### BACKGROUND

The fifth generation (5G) and beyond communication systems face diverse demands for applications such as low latency, improved reliability, high data rates, and flexibility. The increasing demand on data rates from the massive number of devices motivates the need to develop novel system architectures that are both energy and spectrally efficient. For the past years, state of the art research has focused on leveraging large-scale Multiple-Input-Multiple-Output (MIMO) systems, such as massive and millimeter wave (mmWave) MIMO at the base stations (BSs) and mobile users.

Multipath is a phenomenon that occurs when electromagnetic waves reflect on various obstacles, depending on the wavelength of the waves. For example, the electromagnetic waves employed in communication systems may reflect on surfaces such as floors, ceilings, walls, trees, people walking by, or the like, and thus arrive at a receiver via different paths at different times. When signals carried by the electromagnetic waves arrive at the receiver out-of-phase, destructive interference may occur that may cause reduction or even cancellation of the signal, referred to as fading. Antenna diversity is a technique that can be used to improve radio communication and improve the chance of a signal to be correctly received even in a non-static environment.

Both transmitter and receiver diversity techniques have their own advantages. There are several receiver diversity techniques such as selection combining, maximum ratio combining, or equal gain combining. Selection combining may be preferred for some applications in particular for its lower complexity. For example, in case of low latency applications in 5G and beyond communication systems or in Wi-Fi systems, the selection combining complexity may benefit from further reduction in complexity.

### SUMMARY

Methods and techniques are described herein for facilitating path selection at a wireless receiver by using and/or training a machine learning model.

The invention is defined by the independent claims. Some exemplary implementations are provided by the dependent claims.

For example, methods and apparatuses are provided for reception path selection, including inputting, to a trained machine learning module (MLM), path identifications representing paths selected as having a best reception quality for respective preceding reception periods; obtaining from the MLM, an identification of a predicted path predicted to provide a best reception quality in an upcoming reception period; and selecting the predicted path for receiving signals in the upcoming reception period.

Moreover, methods and apparatuses are provided for determining a time period comprising: inputting, to a MLM, time period settings for the receiver diversity configuration previously selected as best for respective predetermined time intervals, wherein the time period setting is a length of time period in which the receiver diversity configuration remains the same; obtaining, from the MLM, a predicted time period for the upcoming time interval, predicted to be best among predefined time period settings according to a predefined criterion; and setting the predicted time period for the upcoming time interval.

Methods and apparatuses for training the MLM used for reception path selection and for training the MLM used for determining a time period are provided.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a", "an", and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a block diagram illustrating an exemplary communication system.
- FIG. 2: is a block diagram illustrating an exemplary antenna selection architecture.
- FIG. 3: is a flow chart illustrating a method for selecting best path for a current time interval using a pre-trained machine learning module.
- FIG. 4: is a schematic drawing illustrating main steps of an inference method for selecting best path.
- FIG. 5: is a schematic drawing illustrating main steps of a training method for selecting best path.
- FIG. 6: is a flow chart illustrating a method for training a machine learning model for selecting best path for a current time interval.
- FIG. 7: is a schematic drawing illustrating a sliding window in inference and/or training.
- FIG. 8: is a schematic drawing illustrating an exemplary part of a neural network which may be employed by the machine learning model.
- FIG. 9: is a flow chart illustrating a method for training on the fly.
- FIG. 10: is a flow chart illustrating a method for determining a time period for a receiver diversity configuration.
- FIG. 11: is a flow chart illustrating a method for training a machine learning module for determining a time period for a receiver diversity configuration.
- FIG. 12: is a block diagram illustrating an exemplary receiving device.

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one". Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

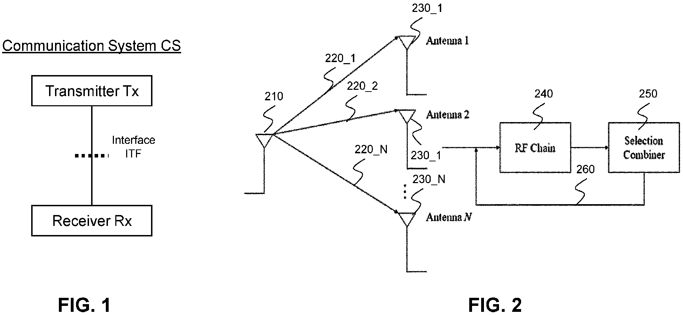

Fig. 1 illustrates an exemplary communication system CS in which Tx represents a transmitter and Rx represents a receiver. The transmitter Tx is capable of transmitting a signal to the receiver Rx over an interface ITF. The interface may be, for instance, a wireless interface. For example, the wireless interface may be implemented by a single antenna of transmitter Tx and/or receiver Rx. Alternatively, the wireless interface may be implemented by multiple antennas of the transmitter Tx and/or receiver Tx. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11 be, and 6G technologies or the like.

In the reception applying selection combining, the receiver Rx selects a signal with the highest Signal to Noise Ratio (SNR). It is noted that when referring herein to noise, what is meant is any kind of noise distorting the transmitted signal, which may include interference from other devices.

An example of antenna selection implementation is illustrated in Fig. 2. In particular, a signal transmitting antenna 210 is a part of the transmitter, such as Tx in Fig. 1. N receiving antennas 230_1, 230_2 to 230_N, a radio frequency (RF) chain 240, and a selection combiner 250 are part of a receiver, such as Rx in Fig. 1. With N being a number of antennas, there is N respective channels 220_1, 220_2 zo 220_N. The receiver Rx calculates the SNR for each path (here channel) and selects the path which has the highest SNR. The RF chain 240 may include typical front end features of a receiver such as one or more power amplifier, possibly one or more filters (e.g. band pass, low pass or the like), mixers, attenuators, detectors, or the like. The selection combiner 250 calculates the SNR and selects an antenna for future reception by a control signal 260.

However, it is in general complex to calculate SNR for each transmission. Therefore, SNR may calculated periodically, and in this period, the antenna that has the highest SNR is used for the transmission. However, there may be two problems. First, in every period, the highest SNR should be calculated. This is especially an issue concerning computational complexity when N is high. Second, how long the period should be configured. The present disclosure addresses these problem and employs machine learning, ML, to solve them.

When referring to ML, what is meant is a trainable and/or trained model, such as artificial intelligence based on neural networks or the like.

According to an embodiment, a method 300 is provided for reception path selection. In general, the term "path" may be understood as defined by a delay and/or angle of arrival at the receiver. However, in context of Fig. 2, a path may be understood more narrowly as given by a respective reception antenna (and possibly delay). Although Fig. 2 shows one Tx antenna 210 only, it is noted that in general, a transmitter Tx may include more than one antennas, e.g. two or more antennas.

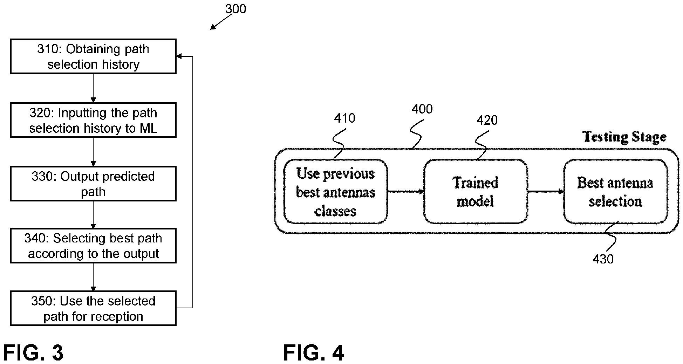

The method 300 is illustrated in a flowchart of Fig. 3 and comprises obtaining 310 and inputting 320, to a trained machine learning module, a plurality of path identifications representing paths selected among a plurality of possible reception paths as having a best reception quality for respective preceding reception periods.

In other words, the ML module is trained with a best paths selected in previous reception periods. A plurality means herein two or more. It is noted that the plurality of path identifications may be a sequence of path identifiers, e.g. ordered according to the time period they are related to, for example from the more recent to less recent. While such ordering may provide additional benefits of distinguishing the most recent best paths, the present disclosure can also work without such ordering.

When referring to best paths, these best paths are selected as best by the ML model during the inference phase (when applying the trained ML model). It is possible to base the best paths selection solely on the preceding outputs of the ML model. Advantageously, the preceding best paths are immediately preceding (most recently selected) paths. This approach enables reduction of complexity, as SNR calculation is no longer necessary in this phase.

However, the present disclosure is not limited to such best paths. It is conceivable that paths may be calculated (possibly less frequently than predicted by the ML model) based on the SNR. Thus, the plurality of identifications may include not only parts selected previously by the ML model, but also paths calculated based on the SNR.

The method 300 further comprises obtaining 330, as an output of the machine learning module, an identification of a predicted path that is predicted to provide a best reception quality in an upcoming reception period among the plurality of possible reception paths, and selecting 340 the predicted path for receiving signals in the upcoming reception period. The predicted (selected in step 340) path may then be used 350 in the reception of signals in the upcoming reception period. In particular, the method 300 may further comprise processing 350 signals received only over the selected predicted path in the upcoming reception period. Then the entire process may repeat.

In some implementations, the predicted path is stored into a history of selected paths (path selection history) which is then obtained and input into the MI module in step 320. The history may have a predetermined length (e.g. store M most recent selected paths) and be organized as a circular buffer rewriting the oldest entries.

In other words, an ML algorithm is used to select which antenna will be the best in the future based on past selections.

The present disclosure is in principle applicable to any kind of link such as uplink, downlink or sidelink, backhaul or for direct device to device communication without involvement or further infrastructure. Nevertheless, when the path is a downlink path, the selection may likely be performed by a mobile device limited in power and/or computational complexity. Thus, application to downlink may be particularly desirable,

As mentioned above, the reception quality is measured in terms of SNR. However, the present disclosure is not limited to SNR as a measure. It is conceivable to use mere signal strength or other path quality indicators.

Fig. 4 summarized the inference phase (or test phase) of using the ML model for antenna selection. In particular, the test phase 400 comprises using 410 the best previous antennas to feed the trained ML model 420 and thereby obtaining at the output of the ML model 420 the predicted antenna selection 430.

It is noted that the trained ML model may be continuously retrained based on actual SNR (calculated). This enables better adaption to the environment and deployment scenario.

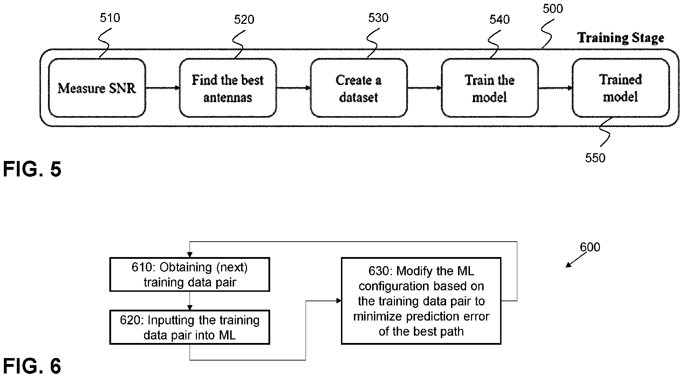

The present disclosure employs a learning-based strategy. This strategy includes two stages, which are referred to as training and testing (or inference) as mentioned above. In the training stage, the dataset is collected, and the ML model is configured and trained as shown in Fig. 5. Then, in the testing or inference stage, the antenna selection is performed as shown in Fig. 4. The term "testing" here may be understood as synonymous with "inference". Both refer to employing the trained model for selecting (predicting) the best path. In this context, "best" here means best according to the pre-trained ML model, not necessarily objectively best. The testing/inference may include a phase in which it is tested whether the ML model is sufficiently trained (provides acceptable results in comparison with e.g. calculated data) and/or phase in which the ML model is actually employed to perform the prediction.

As shown in Fig. 5, in the training stage 500, SNR measurements of the N number of antennas are collected 510 for training. This may be performed, for instance, by receiving signal by each of the N antennas that is known to the transmitter Tx and the receiver Rx, i.e. by receiving reference signal. Based on the reference signals, the SNR can be estimated. The estimation may be performed by computing the SNR value over the resources used for receiving data according to any of the well-known channel estimation approaches.

Then, the highest SNR of these measurement based estimations (also referred to as "measurements") is acquired 520, for example by performing a comparison of all SNR values of all respective N antennas for a given time instant. It is noted that the time instances for which the SNR measurements are obtained may in fact refer to time periods for which the SNR measurements are considered as valid. For example, in practical systems, the time instances / periods may be defined by time-domain units of such practical systems. For example, in 5G or WiFi, the time instances may correspond to a subframe or OFDM symbol or another physical layer time domain unit.

After collecting the measurements, a dataset is obtained 530 as follows. An entry (sample) of input to training may be formed by a sliding window that moves over a time domain. For instance, if the length of the sliding window is set to 7, then each input will have a 7 × 1 vector of classes' numbers which represent the best antenna in the time instances included in the sliding window. Moreover, another input to the training is the desired output data associated with this input. The desired output data (ground truth) is the best antenna class for the upcoming time interval, which is to be predicted. Once the training data are obtained including a plurality of the entries (samples), the learning model is trained 540. After performing the training, the trained model is obtained 550.

In particular, according to an embodiment, a method 600 is provided for training a machine learning module for predicting a path to provide a best reception quality in an upcoming reception period among a plurality of possible reception paths. Such method is illustrated in Fig. 6 and may be part of the training 540 as shorn in Fig. 5.

The method comprises a step of obtaining 610 a training data pair including or consisting of, for each of a first plurality of reception periods consecutive in time, an identification of a reception path that provides a best reception quality among a plurality of reception paths for said reception period based on reception quality measurement. The plurality of reception periods may be for example K reception periods, K being an integer larger than zero. These K reception path identifications may be, for instance, antenna identifications (e.g. numbers or labels associated with respective physical antennas). The identifications pertaining to the K reception periods may be sorted according to increasing time.

In general, in step 630, training is performed of the machine learning module to minimize the prediction error in a current reception period between ground truth i) and prediction by the ML model ii) that are:
i) the obtained identification of a reception path that provides the best reception quality in the current reception period and
ii) a predicted identification of a reception path that provides the best reception quality in the current reception period, wherein the predicted identification is predicted by the machine learning model based on the obtained identifications for a second plurality of reception periods preceding the current reception period.

For example, the second plurality of reception periods is smaller than the first plurality of reception period. Then, it is possible to input 620, to the machine learning module, for each of the first plurality of reception periods consecutive in time the obtained identifications. For example, a vector of K identifications may be input into the ML module (corresponding to the first plurality). The ML module may then be trained to predict the K-th identification form the K-1 preceding identifications (corresponding to the second plurality). The adaption of the ML model is performed based on the mismatch between the K-th identification (ground truth) and the prediction (based on the K-1 preceding identifications).

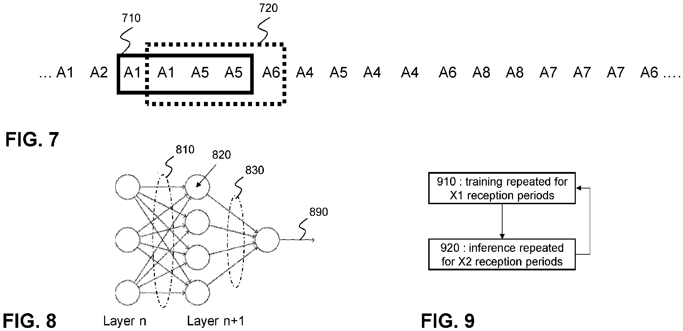

In the method 600 of Fig. 6 it is shown that the training step described above is performed repeatedly, for example with many training data pairs (pairs of input and ground truth). In particular, as mentioned above with regard to inference phase, the data pairs may be obtained by applying sliding window of size K to a sequence of stored past best antenna selections (selected for the respective past reception periods). In other words, the second plurality of reception periods may be determined as a sliding window subset within the first plurality of reception periods. This is illustrated in Fig. 7. In particular, Fig. 7 shows a sequence of identifiers of antennas that have been selected as best antenna among 8 antennas A1 to A8 in consecutive reception periods (e.g. physical layer subframes or time slots or OFDM symbols or the like). Window 710 marks four (consecutive in time domain) best antenna identifiers A1, A1, A5, A5. These are input into the ML model which in response to this input generates a predicted best antenna identifier for the current reception period, e.g. A5 (not shown in Fig. 7), for the current reception period. However, as can be seen in Fig. 7, the actually best antenna identifier would be A6 (ground truth). Thus, the weights of the ML model may be adapted accordingly. The next sliding window 720 includes antenna identifiers A1, A5, A5, A6 for the (next) current reception period. The ML model which in response to this input generates a predicted best antenna identifier for the current reception period, e.g. A6 (not shown in Fig. 7), for the (next) current reception period. However, as can be seen in Fig. 7, the actually best antenna identifier would be A4 (ground truth). Thus, the weights of the ML model may be adapted accordingly. This is continued for the further antenna identifiers obtained by sliding the window of 4 (in this example) further. It is noted that the identifiers A1-A8 are a mere example and present disclosure is not limited to any particular antenna / path labeling and to any particular number of antennas or paths for selecting.

Not shown in Fig. 600 is terminating of the training phase. The present disclosure is not limited to any particular conditions at which the training stops. It does not have to stop, since it is possible to train the ML model on the fly, i.e. alternatingly with inference phase when deployed. On the other hand, in some implementations, the training phase may be separated from the inference phase. For example, the ML model is trained with a complete training data set and then the parameters are fixed (e.g. weights and/or biases) and do not change during the usage of the ML model (inference phase). In such cases, the training may stop after it was performed for the entire training data set of a given size or it may stop when its accuracy (or other parameter) exceeds or reaches a given threshold.

The ML model may be based for instance on a neural network (with one or more layers). In such case, the training may include, for instance, adapting the weights and/or biases of such a neural network. An example of a portion of a neural network is schematically illustrated in Fig. 8. In particular, Fig. 8 shows three layers (n, n+1, and output layer) of a neural network.

Empty circles such as 820 illustrates nodes of the neural network which are referred to as perceptron in some architectures. They may receive multiple inputs that may, correspond to outputs of perceptrons of a preceding layer, weighted by respective weights. For example, layer n+1 perceptrons receive as inputs the outputs of layer n perceptrons weighted by weights 810. On the other hand, output perceptron receives as input outputs of the layer n+1 perceptrons weighted by weights 830. The perceptrons of two consecutive layers may be, but do not have to be, fully connected. The output 890 of the network represents (similarly to the inference stage) prediction of the path indication that would provide best SNR generated by the network including the network part 800. Based on comparison of the output 890 and the ground truth, the weights 810, 830 may be changed so that the network output 890 comes closer to the ground truth. This may be realized by any of the well-known approaches such as back propagation learning or the like. It is noted that a neural network may be further or alternatively parametrized by biases. Biases influence in each perceptron 820, how the output is constructed based on the weighted inputs. For example, a bias may be a constant which is added to the product of features (inputs to perceptron) and their weights. It is used to offset the result. However, these are only examples for a typical neural network. In general, the present disclosure is not limited to perform training by modifying weights and/or biases and can also work with other parametric trainable models.

As mentioned above, the training and inference phases may be alternated so that the receiver Rx may from time to time perform actual calculation of SNR and based on it produce training data and use these data for training the ML model further. In particular, in the run-time operation (inference phase), previous best antennas' classes (identifiers) are used to predict the corresponding best antenna in the upcoming time instant. This is achieved by feeding the previous best antenna classes as a vector to the learning model already trained.

Thus, the methods for inference 300 and training 600 are not necessarily separate methods. Rather, for example, the method 300 may be repeated for a given number of times and then method 600 may be performed for a given number of times and this may be repeated as shown in Fig. 9. In particular, training may be performed 910 with X1 training data pairs corresponding to respective X1 reception periods. Then, inference may be performed 920 in X2 reception periods. After the inference 920, a next training phase 910 may be performed with a further X1 training data pairs. It is noted that in general, X1 and/or X2 may vary in time (e.g. based on quality of prediction, more or less training reception periods X1 may be provided). It may be advantageous for reduction in complexity, if X1 < X2.

In other words, the method 300 may practically be extended to include training steps. For example, the method 300 in some exemplary implementations may further comprise a step of training the machine learning model 910 and the step of the training the machine model includes (similarly to method 600) obtaining 610, for a reception period, an identification of a reception path that provides a best reception quality among a plurality of reception paths for said reception period based on reception quality measurement; as well as inputting 620, to a machine learning module, the obtained identification for the reception period. Then, the machine learning module is adapted 630 based on: i) the obtained identification of a reception path that provides the best reception quality in the reception period, and ii) a predicted identification of a reception path that provides the best reception quality in the current reception period, wherein the predicted identification is predicted by the machine learning model based on the obtained identification. Said step of training 910 is a re-training performed every predefined number of reception periods (e.g. after each X2 reception periods as mentioned above). For example, the reception path selection is antenna selection or selection combining.

According to an embodiment that is also applicable to any of the preceding embodiments or may be stand alone, periodicity, which determines when a new selection should be made, may be also determined. For this purpose, another ML-based approach may be used, including two stages, which are referred to as training and testing (or inference). In the training stage, the dataset is collected, and ML model is configured and trained. Then, in the testing stage, the periodicity prediction is performed. The prediction of the path selection period (e.g. the above mentioned reception period) may thus be flexible which can reduce computational overhead by only performing path selection with the interval necessary for a given scenario. In other words, it is not necessary to select the path with a fixed reception period, but rather the reception period may vary with time according to requirements of the application, channel conditions, or the like.

In the training stage, optimum periodicities which are obtained for example with trial-and-error methods are collected for training. After collecting the measurements, the dataset may be obtained as follows. A sample of training data input is formed by a sliding window that sweeps the time (for instance, if the length of the sliding window is set to 7, then each input will have a 7 × 1 vector of classes' numbers which is the best period). Also, to indicate application requirements, the desired performance requirements can be added to input dataset or application or class of application can have respective ID numbers associated with them (e.g. in a standard) and these ID numbers can be given to indicate performance requirements (e.g. QoS classes or the like). Moreover, the output data (ground truth) for this input is the period time for the upcoming time interval, which is to be predicted. Once the training data are obtained, the learning model is trained. The run-time operation is represented by the testing stage (inference). In this stage, previous periodicities are used to predict the corresponding best periodicity in the upcoming time instant. This is achieved by feeding the previous best periodicity time as a vector to the learning model already trained. It is noted that correspondingly to the training stage, the input may further include requirements such as the ID number representing application of QoS class as mentioned above.

Such finding of the optimum path selection period can also be applicable to other MIMO techniques or in general receiver diversity configurations such as maximum ratio combining and is not limited to antenna selection or selection combining.

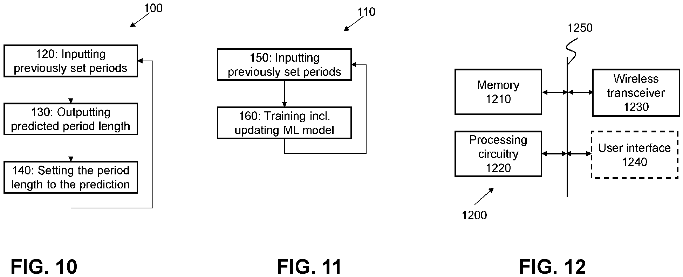

For example, a method 100 is provided for determining a time period for a receiver diversity configuration. The method 100 is illustrated in Fig. 10 and may comprise:
- inputting 120, to a machine learning module, data including at least time period settings for the receiver diversity configuration that were previously selected as best for respective predetermined time intervals,
- obtaining 130, from an output (e.g. more specifically as an output) of the machine learning module, a predicted time period for the upcoming predetermined time interval, predicted to be best among a plurality of predefined time period settings according to a predefined criterion, and
- setting 140 the predicted time period for the receiver diversity configuration for the upcoming predetermined time interval.

The time period setting is a length of a time period in which the receiver diversity configuration remains the same. For example in case of the above mentioned antenna selection embodiments, the time period setting would be a setting of the length of the reception period, i.e. the period in which the antenna selection is valid. Such time period setting may be in units of the physical layer, e.g. in number of OFDM symbols, time slots, subframes, frames or other units.

The ML model in this embodiment may be also referred to as period setting ML model as opposed to the path selection ML model described with reference to Figs. 3 to 9.

The upcoming predetermined time interval may be a given time interval in which the period setting remains the same, i.e. in which the antenna selection (or in general path selection or another kind of reception diversity) is performed with the period setting determined by the period setting ML model. The upcoming predetermined time interval may be given as a fixed value or may be configurable e.g. depending on the deployment scenario, application requirements, channel characteristics or the like.

The plurality of predefined time period settings may be given e.g. in a standard. They may be pre-defined so as to cover reasonable period settings for all intended applications and deployment scenarios as well as characteristics of the wireless system. The number of the predefined period settings may be any number larger than one. For example, 4 or 8 or any other number of configurable, mutually different period settings may be provided. The predefined criterion may include, for example, quality and complexity. To satisfy both, for instance, a cost function including them may be defined and the predefined criterion may be minimizing the cost function. Another possible, simpler strategy may be based on a given threshold. This threshold can be also based on the application and/or the environment. For example, if the performance (in terms of the quality and/or the complexity) is lower than the threshold, the period setting is changed (new ML model output is obtained). In general, the predefined criterion may be a cost function including reception quality. According to an exemplary implementation, if the predefined criterion is a cost function including reception quality, the method may further comprise measuring the reception quality. In case the measured reception quality falls below a predefined threshold, the time period for a receiver diversity configuration is determined. In case the measured reception quality exceeds the predefined threshold, reception is performed according to the receiver diversity configuration and the determined time period (no change is necessary).

In some exemplary implementations, the inputting 120 into the ML model further comprises inputting of application requirement information.

For example, If the selected antenna is not updated, the performance may be decreased. However, if we the antenna selection is changed all the time, the complexity will be increased. Therefore, finding an optimum or at least a suitable periodicity may essentially help in increasing efficiency. The optimum periodicity can be found, as mentioned above, by the threshold. If the SNR or a performance metric (e.g. based on the complexity and reception quality) is lower than a threshold, the antenna selection should be made again. Still, for some applications, performance will be not very important (e.g. background services such as sending e-mails or the like). However, for a case of ultra reliable, low latency applications such as healthcare industry and intelligent transportation, an SNR or in general performance loss may cause difficulties. Therefore, the periodicity of selection may depend on the application.

As mentioned above, the reception mode is a path selection, an antenna selection, or a maximum ratio combining.

In order to be used for inference, the period setting ML model may be trained at first. In particular, a method is provided for training a machine learning module for determining a time period for a receiver diversity configuration. The method is illustrated in Fig. 11 and comprises inputting 150, to the (period setting) machine learning module, time period settings for the receiver diversity configuration that were previously selected as best for respective predetermined time intervals. As mentioned above, the time period setting is a length of a time period in which the receiver diversity configuration remains the same. These time period settings (also referred to as period settings) may be determined as mentioned above, by applying the threshold or an optimization or the like. Then, the machine learning module is trained to minimize the prediction error in a current reception period between: i) a predicted time period for the upcoming predetermined time interval, predicted to be best among a plurality of predefined time period settings according to a predefined criterion, and ii) a computed time period for the upcoming predetermined time interval, computed as sufficient for achieving desired reception quality.

As indicated in Fig. 11, the training may be repeated for a given number of times (e.g. given by the size of the training data set) or repeated until the ML model is trained to have a sufficient performance. Alternatively, the ML model may be updated/re-trained on the fly (alternatedly with the inference phase).

As mentioned above, in some implementations, the computed time period is determined as the time period in which a measured reception quality falls under a predefined threshold.

The antenna selection method 300 may be combined (extended) with the period selection. For example, the method 100 of Fig. 10 may include, after step 140, the method 300 of Fig. 3 using the set period length. After method 300 is performed, for the given upcoming predetermined time interval, the method 100 is repeated, starting from step 120 again.

It is noted that the method 100 may also incorporate method 900 of Fig. 9. For example, after step 140, the method 900 of Fig. 9 using the set period length and possibly training on the fly may be performed. After method 900 is performed, for the given upcoming predetermined time interval, the method 100 is repeated, starting from step 120 again.

In summary, following are features provided by the present disclosure:
- Using a first ML model for best antenna prediction in selection combining. Here, the ML works as a predictor to predict the future best path (antenna) to be selected.
- Using a second ML model to find an optimum periodicity for antenna selection for future time instants.
- Finding the periodicity based on the application requirements.
- Automatic and adaptive period finding method for selection combining.

In a known selection combining approach, there is a need to find SNR values for each antenna. In the present disclosure, in the testing stage, which may represent real-time inference, there is no need to find SNR values for each antenna. Instead of that, we use previously selected/determined antennas and based on that; we select the best antenna for the current time. This is possible with the usage of an ML model. Here previous best antennas are fed to an ML model, so current SNRs for each antenna were not estimated. Therefore, the estimation problem turns into a prediction problem. This reduces real-time complexity. This is especially the case when N is high.

In the above mentioned embodiments and exemplary implementations, steps have been described, to be performed to estimate best path or a most suitable time period setting. These methods may be implemented in different ways. For example, a computer program may be stored on a computer-readable medium, the computer program comprising code instructions which, when executed on one or more processors, cause the one or more processors to execute any of the above described methods.

Moreover, the present disclosure provides any kind of apparatus that is capable of or configured to performing any of the above described methods.

An exemplary apparatus (device) 1200 is illustrated in Fig. 12. The device comprises processing circuitry 1220. The processing circuitry may have any hardware structure. For example, it mac comprise one or more processors and/ or programmable hardware or application-specific hardware.

The device of Fig. 12 may implement an apparatus for reception path selection. In such case, the processing circuitry 1220 is configured to input, to a trained machine learning module, a plurality of path identifications representing paths selected among a plurality of possible reception paths as having a best reception quality for respective preceding reception periods; to obtain, as an output of the machine learning module, an identification of a predicted path that is predicted to provide a best reception quality in an upcoming reception period among the plurality of possible reception paths; and to select the predicted path for receiving signals in the upcoming reception period.

It is noted that the apparatus 1200 may further include a storage (e.g. a memory) 1210. The memory may store program code which is loadable into the processing circuitry 1220 and configure the processing circuitry to perform the methods described above. It is noted that the memory 1210 and/or the processing circuitry 1220 and/or a transceiver 1230 and/or a user interface 1240 may be coupled via a bus 1250. The bus 1250 may enable transfer of data between the connected entities.

As shown in Fig. 12, the apparatus 1200 may further comprise the transceiver 1230 configured to receive signals over the selected predicted path. The transceiver may incorporate receiver and/or transmitter. Moreover, the apparatus may, but does not have to include the user interface 1240. The user interface may be an interface enabling user to input data and/or to enable displaying data.

It is noted that Fig. 12 shows a structure of a device 1200 which may embed (alternatively or in addition to the apparatus for predicting a path) an apparatus for training a machine learning module of the apparatus described above for predicting a path to provide a best reception quality in an upcoming reception period among a plurality of possible reception paths. Such apparatus (device) comprises the processing circuitry 1220 which is configured to obtain, for each of a first plurality of reception periods consecutive in time, an identification of a reception path that provides a best reception quality among a plurality of reception paths for said reception period based on reception quality measurement; input, to a machine learning module, for each of the first plurality of reception periods consecutive in time the obtained identification; and train the machine learning module to minimize the prediction error in a current reception period between: (a) the obtained identification of a reception path that provides the best reception quality in the current reception period; and (b) a predicted identification of a reception path that provides the best reception quality in the current reception period, wherein the predicted identification is predicted by the machine learning model based on the obtained identifications for a second plurality of reception periods preceding the current reception period.

Alternatively or in addition to the above mentioned devices, the device 1200 or Fig. 12 may embody an apparatus for determining a time period for a receiver diversity configuration, Such apparatus comprises the receiver (transceiver 1230) and the processing circuitry 1220 that is configured to: (a) input, to a machine learning module, time period settings for the receiver diversity configuration that were previously selected as best for respective predetermined time intervals, wherein the time period setting is a length of a time period in which the receiver diversity configuration remains the same, (b) obtain, from an output of the machine learning module, a predicted time period for the upcoming predetermined time interval, predicted to be best among a plurality of predefined time period settings according to a predefined criterion, (c) set the predicted time period for the receiver diversity configuration for the upcoming predetermined time interval, and (d) control the receiver to receive the signals according to the set predicted time period.

Alternatively or in addition to the above mentioned devices, the device 1200 or Fig. 12 may embody an apparatus for training a machine learning module of the apparatus described above, for determining a time period for a receiver diversity configuration, the apparatus comprising a processing circuitry configured to: (a) input, to a machine learning module, time period settings for the receiver diversity configuration that were previously selected as best for respective predetermined time intervals, wherein the time period setting is a length of a time period in which the receiver diversity configuration remains the same, and (b) train the machine learning module to minimize the prediction error in a current reception period between: a predicted time period for the upcoming predetermined time interval, predicted to be best among a plurality of predefined time period settings according to a predefined criterion; and a computed time period for the upcoming predetermined time interval, computed as sufficient for achieving desired reception quality.

It is noted that Fig. 12 is only an example of a structure of the devices referred to above. The present disclosure is not limited to such structure. The device may be any wireless receiver (and possibly implementing also transmitter) or the like.

### Implementations in software and hardware

It is noted that although embodiments and examples of the present disclosure were provided in terms of an apparatus above, the corresponding method provides the functionality described by the apparatus are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the control device 300 may be stored as one or more instructions or code on a non-transitory computer readable storage medium. The computer-readable media includes physical computer storage media, which may be any available medium that can be accessed by the computer, or, in general by the processing circuitry 320. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like.

Combinations of different storage media are also possible - in other words, distributed and heterogeneous storage may be employed.

For example, the program code may cause the processing circuitry 261 (e.g. including one or more processors) to operate as a special purpose computer programmed to perform the techniques disclosed herein.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein. In particular, the above embodiments and exemplary implementations are multiple-input multiple-output (MIMO) compatible and can be applied to all MCSs.

### Selected embodiments and examples

In the following, selected embodiments are described as aspects of the present disclosure.

According to a first aspect, a method is provided for reception path selection, the method comprising: inputting, to a trained machine learning module, a plurality of path identifications representing paths selected among a plurality of possible reception paths as having a best reception quality for respective preceding reception periods; obtaining, as an output of the machine learning module, an identification of a predicted path that is predicted to provide a best reception quality in an upcoming reception period among the plurality of possible reception paths; and selecting the predicted path for receiving signals in the upcoming reception period.

According to a second aspect, in addition to the first aspect, the method further comprises processing signals received only over the selected predicted path in the upcoming reception period.

According to a third aspect, in addition to the first or the second aspect, a path is given by a receiving antenna.

According to a fourth aspect, in addition to any of the first to third aspect, the path is a downlink path.

According to a fifth aspect, in addition to any of the first to fourth aspect, the reception quality is measured in terms of a signal to noise ratio (SNR).

According to a sixth aspect, in addition to any of the first to fifth aspect, the method further comprises a step of training the machine learning model and the step of the training the machine model includes: (i) obtaining, for a reception period, an identification of a reception path that provides a best reception quality among a plurality of reception paths for said reception period based on reception quality measurement, (ii) inputting, to a machine learning module, the obtained identification for the reception period, and (iii) adapting the machine learning module based on: (a) the obtained identification of a reception path that provides the best reception quality in the reception period, and (b) a predicted identification of a reception path that provides the best reception quality in the current reception period, wherein the predicted identification is predicted by the machine learning model based on the obtained identification.

According to a seventh aspect, in addition to the sixth aspect, said step of training is a re-training performed every predefined number of reception periods.

According to an eighth aspect, in addition to any of the first to seventh aspect, the reception part selection is antenna selection or selection combining.

According to an ninth aspect, in addition to any of the first to eighth aspect, said machine learning nodule is a first machine learning module, and the method further comprises: (i) inputting, to a second machine learning module, time period settings for the receiver diversity configuration that were previously selected as best for respective predetermined time intervals, wherein the time period setting is a length of a time period in which the receiver diversity configuration remains the same; (ii) obtaining, from an output of the machine learning module, a predicted time period for the upcoming predetermined time interval, predicted to be best among a plurality of predefined time period settings according to a predefined criterion; and (iii) setting the predicted time period for the receiver diversity configuration for the upcoming predetermined time interval, wherein the receiver diversity configuration is configuration of said reception part selection.

According to a tenth aspect, a method is provided for training a machine learning module for predicting a path to provide a best reception quality in an upcoming reception period among a plurality of possible reception paths. The method comprises the steps of (i) obtaining, for each of a first plurality of reception periods consecutive in time, an identification of a reception path that provides a best reception quality among a plurality of reception paths for said reception period based on reception quality measurement; (ii) input, to a machine learning module, for each of the first plurality of reception periods consecutive in time the obtained identification; (iii) train the machine learning module to minimize the prediction error in a current reception period between: (a) the obtained identification of a reception path that provides the best reception quality in the current reception period and (b) a predicted identification of a reception path that provides the best reception quality in the current reception period, wherein the predicted identification is predicted by the machine learning model based on the obtained identifications for a second plurality of reception periods preceding the current reception period.

According to an eleventh aspect, in addition to tenth aspect, the second plurality of reception periods is determined a sliding window subset within the first plurality of reception periods.

According to a twelfth aspect, in addition to tenth or eleventh aspect, the method further comprises a step of obtaining the reception quality measurement as signal to noise ratio, SNR.

According to a thirteenth aspect, a method is provided for determining a time period for a receiver diversity configuration, the method comprising: (i) inputting, to a machine learning module, time period settings for the receiver diversity configuration that were previously selected as best for respective predetermined time intervals, wherein the time period setting is a length of a time period in which the receiver diversity configuration remains the same, (ii) obtaining, from an output of the machine learning module, a predicted time period for the upcoming predetermined time interval, predicted to be best among a plurality of predefined time period settings according to a predefined criterion, (iii) setting the predicted time period for the receiver diversity configuration for the upcoming predetermined time interval.

According to a fourteenth aspect, in addition to the thirteenth aspect, the inputting further comprises inputting of application requirement information.

According to a fifteenth aspect, in addition to the thirteenth or fourteenth aspect, the reception mode is a path selection, an antenna selection, or a maximum ratio combining.

According to a sixteenth aspect, in addition to the thirteenth to fifteenth aspect, the predefined criterion is a cost function including reception quality.

According to a seventeenth aspect, in addition to the sixteenth aspect, the method further comprises measuring reception quality; in case the measured reception quality falls below a predefined threshold, determining the time period for a receiver diversity configuration, and in case the measured reception quality exceeds the predefined threshold, perform reception according to the receiver diversity configuration and the determined time period.

According to an eighteenth aspect, a method is provided for training a machine learning module for determining a time period for a receiver diversity configuration, the method comprising: (i) inputting, to a machine learning module, time period settings for the receiver diversity configuration that were previously selected as best for respective predetermined time intervals, wherein the time period setting is a length of a time period in which the receiver diversity configuration remains the same; and (ii) train the machine learning module to minimize the prediction error in a current reception period between: (a) a predicted time period for the upcoming predetermined time interval, predicted to be best among a plurality of predefined time period settings according to a predefined criterion, (b) a computed time period for the upcoming predetermined time interval, computed as sufficient for achieving desired reception quality.

According to a nineteenth aspect, in addition to the eighteenth aspect, the computed time period is determined as the time period in which a measured reception quality falls under a predefined threshold.

According to a twentieth aspect, a computer program is provided stored on a computer-readable medium, the computer program comprising code instructions which, when executed on one or more processors, cause the one or more processors to execute the method according to any of the above mentioned first to nineteenth aspect.

According to a twenty-first aspect, an apparatus is provided for reception path selection, the apparatus comprising: processing circuitry configured to (i) input, to a trained machine learning module, a plurality of path identifications representing paths selected among a plurality of possible reception paths as having a best reception quality for respective preceding reception periods; (ii) obtain, as an output of the machine learning module, an identification of a predicted path that is predicted to provide a best reception quality in an upcoming reception period among the plurality of possible reception paths, and (iii) select the predicted path for receiving signals in the upcoming reception period.

According to a twenty-second aspect, in addition to the twenty-first aspect, the apparatus further comprising a receiver configured to receive signals over the selected predicted path.

According to a twenty-third aspect, an apparatus is provided for training a machine learning module of the apparatus according to the twenty-first or twenty-second aspect for predicting a path to provide a best reception quality in an upcoming reception period among a plurality of possible reception paths, the apparatus comprising processing circuitry configured to: (a) obtain, for each of a first plurality of reception periods consecutive in time, an identification of a reception path that provides a best reception quality among a plurality of reception paths for said reception period based on reception quality measurement, (b) input, to a machine learning module, for each of the first plurality of reception periods consecutive in time the obtained identification, (c) train the machine learning module to minimize the prediction error in a current reception period between: (i) the obtained identification of a reception path that provides the best reception quality in the current reception period and (ii) a predicted identification of a reception path that provides the best reception quality in the current reception period, wherein the predicted identification is predicted by the machine learning model based on the obtained identifications for a second plurality of reception periods preceding the current reception period.

According to a twenty-fourth aspect, an apparatus is provided for determining a time period for a receiver diversity configuration, the apparatus comprising a receiver and processing circuitry configured to: (i) input, to a machine learning module, time period settings for the receiver diversity configuration that were previously selected as best for respective predetermined time intervals, wherein the time period setting is a length of a time period in which the receiver diversity configuration remains the same; (ii) obtain, from an output of the machine learning module, a predicted time period for the upcoming predetermined time interval, predicted to be best among a plurality of predefined time period settings according to a predefined criterion; (iii) set the predicted time period for the receiver diversity configuration for the upcoming predetermined time interval; and (iv) control the receiver to receive the signals according to the set predicted time period.

According to a twenty-fifth aspect, an apparatus is provided for training a machine learning module of the apparatus according to the twenty-fourth aspect, for determining a time period for a receiver diversity configuration, the apparatus comprising a processing circuitry configured to: (i) input, to a machine learning module, time period settings for the receiver diversity configuration that were previously selected as best for respective predetermined time intervals, wherein the time period setting is a length of a time period in which the receiver diversity configuration remains the same, and (ii) train the machine learning module to minimize the prediction error in a current reception period between: (a) a predicted time period for the upcoming predetermined time interval, predicted to be best among a plurality of predefined time period settings according to a predefined criterion, and (b) a computed time period for the upcoming predetermined time interval, computed as sufficient for achieving desired reception quality.

It is noted that the processing circuitry of the respective apparatuses may be further configured to perform steps of any of the above-mentioned method aspects.

## Claims

1. A method for reception path selection, the method comprising:
inputting, to a trained machine learning module, a plurality of path identifications representing paths selected among a plurality of possible reception paths as having a best reception quality for respective preceding reception periods,
obtaining, as an output of the machine learning module, an identification of a predicted path that is predicted to provide a best reception quality in an upcoming reception period among the plurality of possible reception paths, and
selecting the predicted path for receiving signals in the upcoming reception period.

2. The method according to claim 1, further comprising processing signals received only over the selected predicted path in the upcoming reception period.

3. The method according to claim 1 or 2, wherein a path is given by a receiving antenna.

4. The method according to any of claims 1 to 3, wherein the reception quality is measured in terms of a signal to noise ratio (SNR).

5. The method according to any of claims 1 to 4, wherein the method further comprises a step of training the machine learning model and the step of the training the machine model includes:
obtaining, for a reception period, an identification of a reception path that provides a best reception quality among a plurality of reception paths for said reception period based on reception quality measurement,
inputting, to a machine learning module, the obtained identification for the reception period, and
adapting the machine learning module based on:
- the obtained identification of a reception path that provides the best reception quality in the reception period, and
- a predicted identification of a reception path that provides the best reception quality in the current reception period, wherein the predicted identification is predicted by the machine learning model based on the obtained identification,
wherein said step of training is a re-training performed every predefined number of reception periods and the reception part selection is antenna selection or selection combining.

6. The method according to any of claims 1 to 5, wherein said machine learning nodule is a first machine learning module, and the method further comprises:
inputting, to a second machine learning module, time period settings for the receiver diversity configuration that were previously selected as best for respective predetermined time intervals, wherein the time period setting is a length of a time period in which the receiver diversity configuration remains the same,
obtaining, from an output of the machine learning module, a predicted time period for the upcoming predetermined time interval, predicted to be best among a plurality of predefined time period settings according to a predefined criterion,
setting the predicted time period for the receiver diversity configuration for the upcoming predetermined time interval, wherein the receiver diversity configuration is configuration of said reception part selection.

7. A method for training a machine learning module for predicting a path to provide a best reception quality in an upcoming reception period among a plurality of possible reception paths, the method comprising:
obtaining, for each of a first plurality of reception periods consecutive in time, an identification of a reception path that provides a best reception quality among a plurality of reception paths for said reception period based on reception quality measurement, inputting, to a machine learning module, for each of the first plurality of reception periods consecutive in time the obtained identification,
training the machine learning module to minimize the prediction error in a current reception period between:
iii) the obtained identification of a reception path that provides the best reception quality in the current reception period and
iv) a predicted identification of a reception path that provides the best reception quality in the current reception period, wherein the predicted identification is predicted by the machine learning model based on the obtained identifications for a second plurality of reception periods preceding the current reception period.

8. The method according to claim 7, wherein the second plurality of reception periods is determined a sliding window subset within the first plurality of reception periods.

9. A method for determining a time period for a receiver diversity configuration, the method comprising:
inputting, to a machine learning module, time period settings for the receiver diversity configuration that were previously selected as best for respective predetermined time intervals, wherein the time period setting is a length of a time period in which the receiver diversity configuration remains the same,
obtaining, from an output of the machine learning module, a predicted time period for the upcoming predetermined time interval, predicted to be best among a plurality of predefined time period settings according to a predefined criterion,
setting the predicted time period for the receiver diversity configuration for the upcoming predetermined time interval.

10. The method according to claim 9, wherein the inputting further comprises inputting of
application requirement information, and/or
the reception mode is a path selection, an antenna selection, or a maximum ratio combining, and/or the predefined criterion is a cost function including reception quality.

11. The method according to claim 10, wherein the method further comprises:
measuring reception quality,
in case the measured reception quality falls below a predefined threshold, determining the time period for a receiver diversity configuration, and
in case the measured reception quality exceeds the predefined threshold, perform reception according to the receiver diversity configuration and the determined time period.

12. A method for training a machine learning module for determining a time period for a receiver diversity configuration, the method comprising:
inputting, to a machine learning module, time period settings for the receiver diversity configuration that were previously selected as best for respective predetermined time intervals, wherein the time period setting is a length of a time period in which the receiver diversity configuration remains the same,
training the machine learning module to minimize the prediction error in a current reception period between:
- a predicted time period for the upcoming predetermined time interval, predicted to be best among a plurality of predefined time period settings according to a predefined criterion,
- a computed time period for the upcoming predetermined time interval, computed as sufficient for achieving desired reception quality.

13. The method according to claim 12, wherein the computed time period is determined as the time period in which a measured reception quality falls under a predefined threshold.

14. An apparatus for reception path selection, the apparatus comprising:
processing circuitry configured to input, to a trained machine learning module, a plurality of path identifications representing paths selected among a plurality of possible reception paths as having a best reception quality for respective preceding reception periods,
obtaining, as an output of the machine learning module, an identification of a predicted path that is predicted to provide a best reception quality in an upcoming reception period among the plurality of possible reception paths, and
selecting the predicted path for receiving signals in the upcoming reception period.

15. An apparatus for determining a time period for a receiver diversity configuration, the apparatus comprising a receiver and processing circuitry configured to:
input, to a machine learning module, time period settings for the receiver diversity configuration that were previously selected as best for respective predetermined time intervals, wherein the time period setting is a length of a time period in which the receiver diversity configuration remains the same,
obtain, from an output of the machine learning module, a predicted time period for the upcoming predetermined time interval, predicted to be best among a plurality of predefined time period settings according to a predefined criterion,
set the predicted time period for the receiver diversity configuration for the upcoming predetermined time interval, and
control the receiver to receive the signals according to the set predicted time period.
